# EUROPEAN PATENT SPECIFICATION

(11) **EP 1 563 610 B1**
(45) Date of publication and mention of the grant of the patent: **19.04.2006**
(21) Application number: 03772401.0
(22) Date of filing: 05.11.2003
(51) Int. Cl.: H04B 1/16

(54) **Interface transceiver power management method and apparatus**
Verfahren und gerät zur Leistungsverwaltung eines Schnittstelletransceivers
Procédé de gestion de puissance d'émetteur-récepteur et appareil

(30) Priority: 07.11.2002 US 289777
(43) Date of publication of application: 17.08.2005
(73) Proprietor: International Business Machines Corporation, Armonk, N.Y. 10504 (US)
(72) Inventor: CARBALLO, Juan, Antonio, Austin, TX 78727 (US); BOERSTLER, David, William, Round Rock, TX 78664 (US); BURNS, Jeffrey, Lyn, Austin, TX 78746 (US)
(74) Representative: Burt, Roger James
(86) International application number: PCT/GB2003/004769
(87) International publication number: WO 2004/042942

(56) References cited:
- US-A- 5 623 533
- US-A- 6 108 561
- US-B1- 6 243 399

## Description

### BACKGROUND OF THE INVENTION

### Technical Field

The present invention relates generally to communication link circuits, and more particularly, to transmitters and/or receivers having selectable complexity and power consumption.

### Description of the Related Art

Interfaces between present-day system devices and also between circuits have increased in operating frequency and complexity. In particular, high speed serial interfaces require data/clock extraction, jitter reduction, phase correction, error correction, error recovery circuits and equalization circuits that can become very complex, depending on the performance requirements of a particular interface. As the above-mentioned circuits become more complex, they have an increasingly large proportion of digital logic and the overall amount of digital logic employed in both receiver and transmitter circuits has increased substantially.

Due to limited design resources and the need to satisfy the requirements of multiple interface applications, customers and channel conditions, transmitters and receivers within above-described interfaces are typically designed for the worst-case bit error rates and environmental conditions, leading to relatively complex receivers and high power transmitters. As a result, it is not always possible to provide a receiver that is not more complex than necessary when a high channel quality is available.

The complexity of the above-mentioned receivers increases as the worst-case error rates and interface conditions deviate from the ideal. Complexity of the transmitter may also increase due to the use of digital equalization circuits and error correction encoding. Power consumption and heat dissipation within interface circuits or systems silicon are thus increased over that which is necessary, in order to meet performance requirements over all anticipated interface conditions.

An example is disclosed in US-B-6 243 399 A.

### SUMMARY OF THE INVENTION

The present invention accordingly provides, in a first aspect, a transceiver for interconnecting electronic devices, comprising: at least one interface circuit having selectable power consumption coupled to one or more interface signals; a select input coupled to said at least one interface circuit for receiving a selection signal, whereby a level of complexity of said one or more interface circuits is selected by a logic state of said select input wherein said at least one interface circuit comprises a receiver circuit and wherein said receiver circuit comprises a sample memory for processing said one or more interface signals and coupled to said select input, said sample memory having a selectable active size, and wherein said selectable active size is selected in conformity with said logic state of said select input.

The present invention accordingly provides, in a second aspect, a method of controlling power consumption in an interface transceiver, comprising: receiving a selection signal at a select input coupled to at least one interface circuit; in response to said receiving, a logic state of said select input selecting a complexity of said receiver processing said one or more interface signals in a sample memory having a selectable active size wherein said selectable active size is selected in conformity with said logic state of said select input.

The characteristics of the receiver and/or a transmitter may be adjusted in response to a select input, permitting the transceiver power consumption and complexity to be tailored to interface requirements. Transmitter power and/or equalization filtering may be reduced if interface conditions permit. Receiver window width, phase correction resolution, error correction depth and equalization filter size, as well as sample memory size may all be adjusted to reduce power consumption and complexity. The selection process may be programmable by a logic connection, register bit or via a signal from an interface quality measurement circuit. A remote transceiver may also be power-managed at the other end of the interface by transmitting a control signal to the remote transceiver.

Preferably the interface transceiver further comprises an interface quality measurement circuit, and wherein said select input is coupled to an output of said interface quality measurement circuit.

Preferably the interface transceiver further comprises a communication link for transmitting an output of said quality measurement circuit to a remote transceiver over said one or more interface signals.

Preferably said at least one interface circuit comprises a transmitter circuit, wherein said transmitter circuit comprises a digital equalization filter coupled to said select input and having a selectable number of multiple taps, and wherein said number of said multiple taps is selected in conformity with said logic state of said select input.

Preferably said at least one interface circuit comprises a transmitter circuit, wherein said transmitter circuit has variable power output, and wherein a level of said variable power output is selected in conformity with said logic state of said select input.

Preferably said at least one interface circuit comprises a receiver circuit, wherein said receiver circuit comprises a digital equalization filter having multiple taps and coupled to said select input, and wherein said number of said multiple taps is selected in conformity with said logic state of said select input.

Preferably said at least one interface circuit comprises a receiver circuit, wherein said receiver circuit comprises a phase control circuit having a selectable resolution and coupled to said select input, and wherein said selectable resolution is selected in conformity with said logic state of said select input.

Preferably said at least one interface circuit comprises a receiver circuit, wherein said receiver circuit comprises a sample memory for processing said one or more interface signals and coupled to said select input, said sample memory having a selectable active size, and wherein said selectable active size is selected in conformity with said logic state of said select input.

Preferably said at least one interface circuit comprises a receiver circuit, wherein said receiver circuit comprises a signal processing block having a selectable sampling window for processing bits received from one of said interface signals and coupled to said select input, and wherein said selectable sampling window is selected in conformity with said logic state of said select input.

Preferably the interface transceiver further comprises a communication link for transmitting a state of said select input to a remote transceiver over said one or more interface signals.

Preferably said at least one interface circuit includes a plurality of alternate circuit blocks, wherein a first one of said circuit blocks is disabled in response to said logic state of said select input, and wherein a second one of said alternate circuit blocks is enabled in response to said logic state of said select input.

Preferably said at least one interface circuit includes a state machine, wherein a complexity of said state machine is adjusted in conformity with said logic state of said select input.

Preferably said select input is coupled to a clock disable circuit within said at least one interface circuit, whereby said at least one interface circuit blocks is disabled by disabling a clock input to said at least one interface circuit.

Preferably said select input is coupled to a reset input of said at least one interface circuit, whereby said at least one interface circuit is disabled by holding said at least one interface circuit in a reset condition in response to said logic state of said select input.

Preferably said select input is coupled to a power supply control circuit for controlling a power supply input of said at least one interface circuit, whereby said at least one interface circuit is disabled by removing power in response to said logic state of said select input.

### BRIEF DESCRIPTION OF THE DRAWINGS

A preferred embodiment of the present invention will now be described with reference to the following figures, in which:
**Figure 1** is a block diagram of transceivers connected by an interface in accordance with an embodiment of the invention.
**Figure 2** is a block diagram of a transceiver in accordance with an embodiment of the invention.
**Figure 3** is a schematic diagram of exemplary power management circuits in accordance with embodiments of the invention.
**Figure 4** is a flowchart depicting a method in accordance with an embodiment of the invention.

### DESCRIPTION OF ILLUSTRATIVE EMBODIMENT

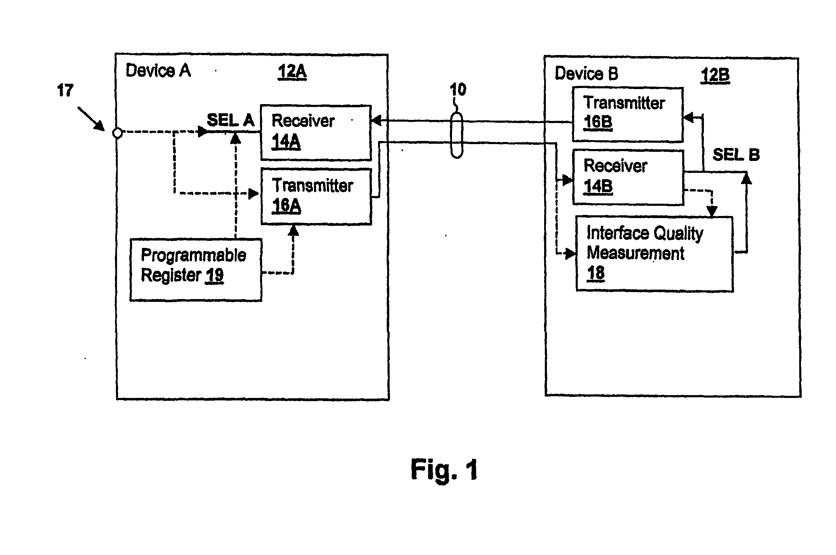

With reference now to the figures, and in particular with reference to **Figure 1,** there is depicted a block diagram of transceivers **12A** and **12B** connected by an interface or channel 10 in accordance with an embodiment of the invention. Transceivers **12A, 12B** may be located within a device such as a computer peripheral, a computer system, or within integrated circuits interconnected within a system. Interface 10 may be a single two wire bi-directional interface as depicted, or may be a full-duplex single wire interface or a bus having multiple transceivers in a half-duplex or full-duplex configuration. Transceivers **12A** and **12B** connected to interface 10 each using a receiver **14A** and **14B** and a transmitter **16A** and **16B,** but it should be understood that a receiver or transmitter in accordance with an embodiment of the invention may be incorporated in devices for connection to any of the above-specified types of interface 10, as well as other forms of electrical signal interconnection.

The interface circuits (transmitters **16A, 16B** and receivers **14A, 14B**) incorporate select inputs **SELA** and **SELB** that reduce the complexity of the connected interface circuits, in order to reduce power consumption. Circuit blocks having lower power consumption may be switched in as alternatives or circuit blocks may be selectively disabled to reduce the number of gates, storage circuits, and/or transitions that occur when processing signals within interface circuits **14A-B** and/or **16A-B.** Analog circuit blocks within interface circuits may also be selectively simplified or eliminated **14A-B** and/or **16A-B** when channel conditions permit.

Thus, the above-described interface circuits provide a selectable power consumption that can be used to provide lower power usage and dissipation within transceivers **12A** and **12B,** when channel conditions are good, while maintaining low bit error rates (BERs) using a higher power consumption state when channel conditions are poor. The selection of power consumption states via select input **SELA** may be hard-wired or externally programmed using an external signal terminal 17 or may be programmed using a bit register **19** within transceiver **12A.** Receiver **14A,** transmitter **16A** or both may be controlled by one or more selection signals, for example, multiple bits may be provided for each of transmitter **16A** and receiver **14A** so that power consumption may be very finely traded off for receiver processing power or transmitter signal strength, etc. Alternatively, a single bit or external terminal may be used to set a single binary power consumption selection for both transmitter **16A** and receiver **14A.**

Transceiver **12A** is an example of a transceiver having external selection via register programming or external connection. As such, it is very useful in integrated circuits and systems, including computer systems, communication systems, or peripherals where external terminal **17** can be hard-wired depending on the application (e.g., known short shielded cable length attached to a peripheral dictates a high channel quality or connection of two transceivers on a high-quality circuit board also dictates high channel quality).

Transceiver **12B** is an example of a transceiver having automatic channel-quality-based complexity selection in response to a measurement performed by interface quality measurement block **18,** which may be an eye-diagram circuit, an error detection circuit or other mechanism for detection that the channel quality is less than a desired threshold. Select signal **SEL B** is provided by an output of interface quality measurement block **18** and automatically selects higher or lower receiver and/or transmitter complexity in conformity with the measured channel quality.

Another type of transceiver power consumption control is provided by an interface link wherein a register such as programmable register **19** may be set via reception of a command code sent over interface **10** and received by a receiver such as receiver **14A.** The interface link control is very useful where the receiver and transmitter characteristics must match (such as when the select signal changes an error-correction length or when matching filters are used at each end of interface 10). Interface link control is also useful for informing a transceiver about channel conditions when the transceiver being programmed has no ability to determine the channel quality or does not have information regarding channel conditions (such as cable length).

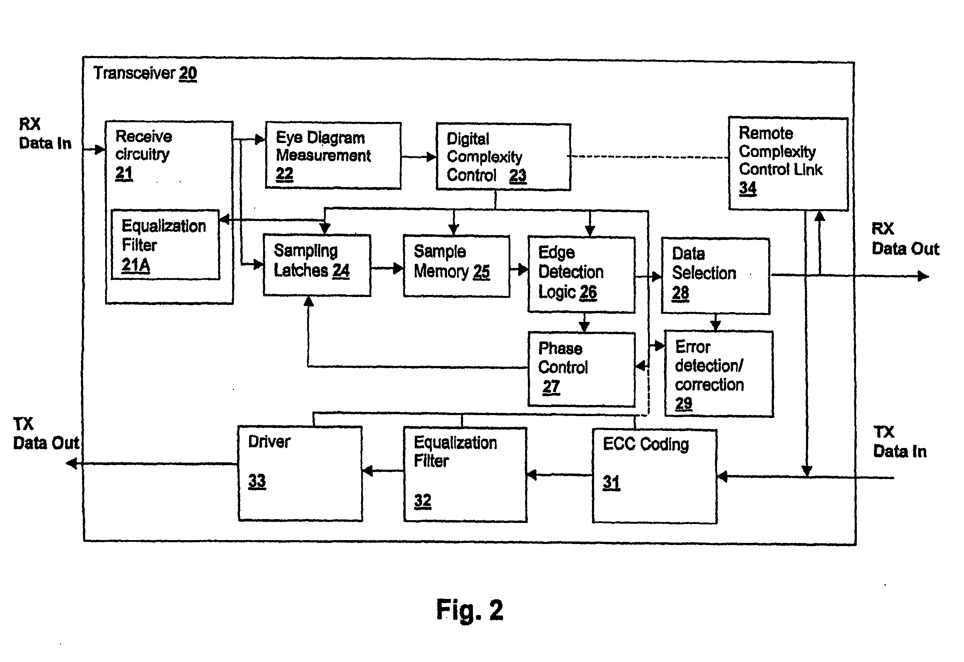

Referring now to **Figure 2,** details of a transceiver **20** in accordance with an embodiment of the invention are depicted. An interface signal is received at **RX Data In** and provided to a receiver circuit **21** that may contain an equalization filter **21A** or may not. The output of receiver circuit **21** is generally presented to a series of sampling latches **24** and data is provided from sample latches **24** to a sample memory **25.** Sampling latches **24** and sample memory **25** are used to "oversample" the received signal so that the edges of the signal can be determined with more accuracy in the face of high frequency jitter.

Edge detection logic **26** detects one or both edges of the received signal (which typically contains clock and data bits) and provides early/late information to phase control 27, which in turn controls sampling latches **24** to compensate for low-frequency jitter. Data is extracted by data selection **28** and error detection and correction circuits **29** may be employed to further minimize the BER of the received signal.

A digital complexity control circuit **23** provides one or more control signals to various of the above-described blocks to select a higher or lower power consumption depending on the channel requirements. The selection may be static or static/programmable as described above with respect to **Figure 1,** or dynamic based upon an output of eye measurement diagram circuit **22** (or other suitable indicator of channel quality). Eye measurement diagram provides a measurement of the signal quality output of receive circuitry **21,** giving an indicator of the impact of jitter on BER. The power consumption of the various circuits is tailored by reducing the overall complexity or direct power levels used by the circuits and may be controlled by individual control bits or a single control bit. For example, the number of sampling latches **24** employed is proportional to the power consumption of the sampling **24** latches block, the size of sample memory **25,** the resolution of the phase control circuit **27** and edge detection logic **27,** and the depth of error correction and detection **29** are all proportional to their power consumption. Any or all of the above-listed circuit blocks may have selectable power consumption and may be controlled independently or together at one or more power consumption levels.

The transmitter portion of transceiver **20** comprises an optional error correction coding circuit **31,** an optional equalization filter 32 and a driver **33** for transmitting data on the interface **TX Data Out.** Digital complexity control **23** may also control the complexity of the transmitter circuits, such as driver **33** current, equalization filter **32** length or ECC coding **31** depth.

Digital complexity control **23** is also shown coupled to an optional remote complexity control link **34** for controlling power consumption. A command received at **RX Data In** can be received and decoded to control the complexity of the circuit blocks within transceiver **20** via the output of data selection **28.** Digital complexity control is also shown coupled to the transmitter circuits for transmitting complexity control information to a remote transceiver. These remote control features are optional and their implementation depends on whether it is possible and desirable to send and receive control information over the interface channel.

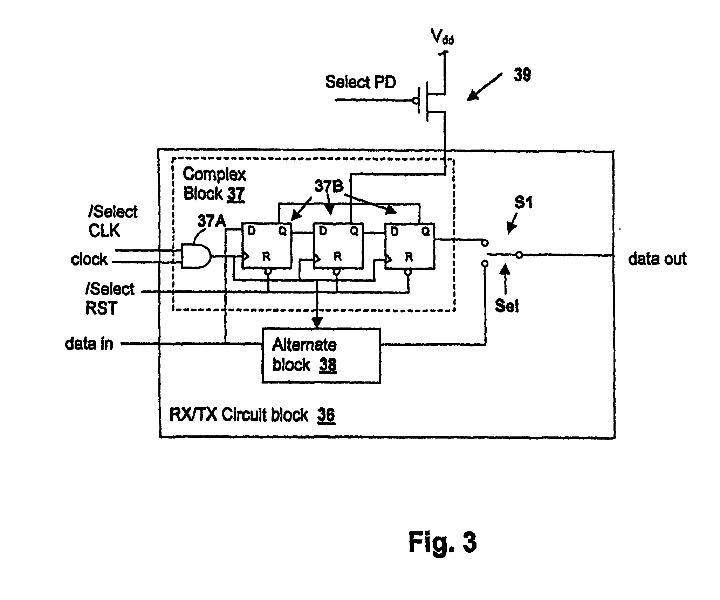

Referring now to **Figure 3,** techniques for controlling power consumption within the interface circuits of **Figure 2** is illustrated. **Select PD** can be used to control power supplied to blocks having power supplies connected through power control transistor **39 or** an **equivalent device, /Select CLK** disables a clock via NAND gate **37A** or equivalent device which serves as a clock disable circuit, and **/Select RST** holds registers **37B** in a reset condition. **Sel** selects between complex block **37** and alternate block **38** (which generally will be disabled when complex block 37 circuits are enabled). The circuits shown in **Figure 3** are illustrative and are not typical of the transceiver circuits described above, which contain a greater number of registers and gates. But the techniques illustrated can be applied together or selectively to disable power consumption within the complex portions of the above-described receivers. Since eliminating clocks or state changes in modern digital circuits may have the same effect on power consumption as removing power as long as leakage paths are not present, any of the above techniques may be sufficient. Another power reduction mechanism is the simplification of state machine circuits, wherein alternative state machines may be selected similarly to the selection between complex block **37** and alternate block **38** or by disabling some of the state registers (and changing the combinatorial feedback logic accordingly).

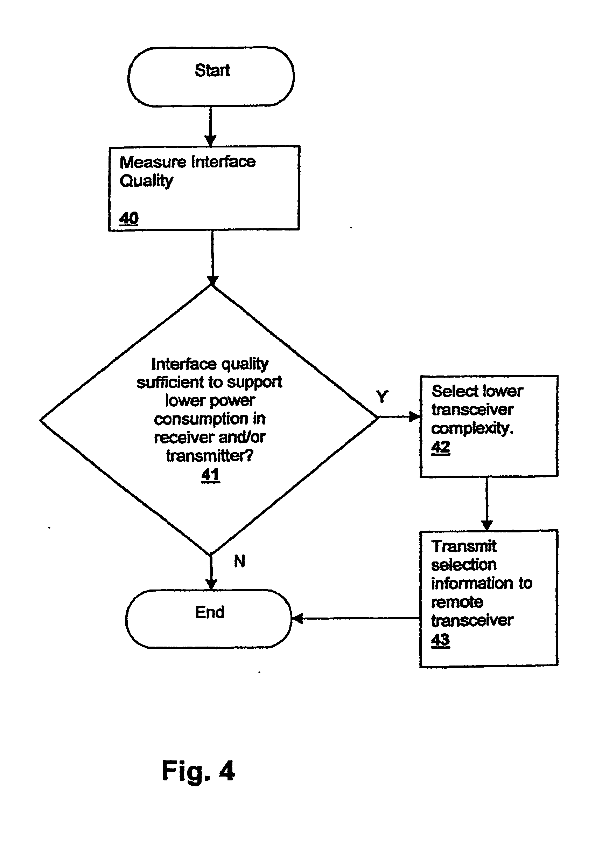

Referring now to **Figure 4,** a control method in accordance with an embodiment of the present invention is shown in a flowchart. First, interface channel quality is measured **(step 40)** and if the interface channel quality is sufficient to support a lower power consumption state within the transceiver **(decision 41),** the lower transceiver complexity is selected **(step 42)** and the selection information is optionally transmitted over the interface to any connected remote transceivers **(step 43).** The above-illustrated method includes optional steps **40** and **43,** to illustrate a complete functionality including autonomic measurement and optional remote control of remote transceivers. However, it should be understood that those optional steps are not necessary for the practice of the invention.

## Claims

1. A transceiver (12A) for interconnecting electronic devices, comprising:
at least one interface circuit (14A, 16A) having selectable power consumption coupled to one or more interface signals;
a select input (17) coupled to said at least one interface circuit (14A, 16A) for receiving a selection signal (SEL A), whereby a level of complexity of said one or more interface circuits is selected by a logic state of said select input (17)
wherein said at least one interface circuit (14A,16A) comprises a receiver circuit (14A) and **characterised in that** said receiver circuit (14A) comprises a sample memory for processing said one or more interface signals and coupled to said select input, said sample memory having a selectable active size, and wherein said selectable active size is selected in conformity with said logic state of said select input.

2. A method of controlling power consumption in an interface transceiver (12A), comprising:
receiving a selection signal (SELA) at a select input (17) coupled to at least one interface circuit (14A,16A);
in response to said receiving, a logic state of said select input (17) selecting a complexity of the receiver (14A),
**characterised in** processing said one or more interface signals in a sample memory having a selectable active size
wherein said selectable active size is selected in conformity with said logic state of said select input.

## Patentansprüche

1. Sender/Empfänger (12A) zum Verbinden elektronischer Vorrichtungen, wobei der Sender/Empfänger Folgendes umfasst:
mindestens eine Schnittstellenschaltung (14A, 16A) mit wählbarem Leistungsverbrauch, die an ein oder mehrere Schnittstellensignale angeschlossen ist;
einen Wähleingang (17), der mit der mindestens einen Schnittstellenschaltung (14A, 16A) verbunden ist, um ein Wählsignal (SEL A) zu empfangen, wodurch ein Grad der Komplexität der einen oder mehreren Schnittstellenschaltungen durch einen logischen Zustand des Wähleingangs (17) gewählt wird;
wobei die mindestens eine Schnittstellenschaltung (14A, 16A) eine Empfängerschaltung (14A) umfasst und **dadurch gekennzeichnet ist, dass** die Empfängerschaltung(14A) einen Abtastwertspeicher umfasst, um das eine oder die mehreren Schnittstellensignale zu verarbeiten, und mit dem Wähleingang verbunden ist, wobei der Abtastwertspeicher eine wählbare aktive Größe besitzt und wobei die wählbare aktive Größe in Übereinstimmung mit dem logischen Zustand des Wähleingangs gewählt wird.

2. Verfahren zum Steuern des Leistungsverbrauchs in einem Schnittstellen-Sender/Empfänger (12A), wobei das Verfahren die folgenden Schritte umfasst:
Empfangen eines Wählsignals (SEL A) an dem Wähleingang (17), der mit der mindestens einen Schnittstellenschaltung (14A, 16A) verbunden ist;
in Reaktion auf das Empfangen eines logischen Zustands des Wähleingangs (17) Wählen einer Komplexität des Empfängers (14A);
**gekennzeichnet durch** das Verarbeiten des einen oder der mehreren Schnittstellensignale in einem Abtastwertspeicher, der eine wählbare aktive Größe besitzt,
wobei die wählbare aktive Größe in Übereinstimmung mit dem logischen Zustand des Wähleingangs gewählt wird.

## Revendications

1. Un émetteur récepteur (12 A) pour interconnecter des dispositifs électroniques, comprenant :
au moins un circuit d'interface (14 A, 16 A) ayant une consommation de puissance pouvant être sélectionnée, couplé à un ou plusieurs signaux d'interface ;
une entrée de sélection (17) couplée audit au moins un circuit d'interface (14 A, 16 A), pour recevoir un signal de sélection (SEL A), de manière qu'un niveau de complexité dudit un ou plusieurs niveaux d'interface soit sélectionné par un état logique de ladite entrée de sélection (17)
dans lequel ledit au moins un circuit d'interface (14 A, 16 A) comprend un circuit récepteur (14 A), et **caractérisé en ce que** ledit circuit récepteur (14 A) comprend une mémoire d'échantillons, pour traiter lesdits un ou plusieurs signaux d'interface et couplée à ladite entrée de sélection, ladite mémoire d'échantillons ayant une taille active pouvant être sélectionnée, et dans lequel ladite taille active pouvant être sélectionnée est sélectionnée en conformité avec ledit état logique de ladite entrée de sélection.

2. Un procédé de commande de la consommation de puissance dans un émetteur récepteur d'interface (12 A), comprenant :
la réception d'un signal de sélection (SEL A) à une entrée de sélection (17) couplée à au moins un circuit d'interface (14 A, 16 A) ;
en réponse à ladite réception, un état logique de ladite entrée de sélection (17) sélectionnant une complexité du récepteur (14 A),
**caractérisé par** le traitement dudit un ou plusieurs signaux d'interface dans une mémoire d'échantillons ayant une taille active pouvant être sélectionnée,
dans lequel ladite taille active pouvant être sélectionnée est sélectionnée en conformité avec ledit état logique de ladite entrée de sélection.
